# EUROPÄISCHE PATENTSCHRIFT

(11) **EP 1 897 068 B1**
(45) Veröffentlichungstag und Bekanntmachung des Hinweises auf die Patenterteilung: **12.05.2010**
(21) Anmeldenummer: 06707644.8
(22) Anmeldetag: 24.03.2006
(51) Int. Cl.: G07D 7/00, G06K 19/07

(54) **SICHERHEITSDOKUMENT MIT INTEGRIERTEM SCHALTKREIS UND ANZEIGESYSTEM**
SECURITY DOCUMENT COMPRISING AN INTEGRATED CIRCUIT AND DISPLAY SYSTEM
DOCUMENT DE SECURITE AYANT UN CIRCUIT INTEGRE ET UN SYSTEME D'AFFICHAGE

(30) Priorität: 30.06.2005 DE 102005030626
(43) Veröffentlichungstag der Anmeldung: 12.03.2008
(73) Patentinhaber: Bundesdruckerei GmbH, 10958 Berlin (DE)
(72) Erfinder: KUNATH, Christian, 12203 Berlin (DE); PAESCHKE, Manfred, 16352 Basdorf (DE); MUTH, Oliver, 12277 Berlin (DE); LEOPOLD, André, 10119 Berlin (DE); KUHN, Christian, 75005 Paris (FR); DRESSEL, Olaf, 14641 Wustermark (DE); HOPPE, Andreas, 12527 Berlin (DE); BEYER-MEKLENBURG, Günter, 16816 Neuruppin (DE); PFLUGHOEFFT, Malte, 13347 Berlin (DE)
(74) Vertreter: Leske, Thomas
(86) Internationale Anmeldenummer: PCT/EP2006/002724
(87) Internationale Veröffentlichungsnummer: WO 2007/003237

(56) Entgegenhaltungen:
- EP-A- 1 513 099
- EP-A- 1 643 464
- WO-A-02/35465
- WO-A-2004/053786
- WO-A-2004/086315
- WO-A-2005/064579
- DE-A1- 10 163 266
- US-A1- 2002 174 013
- US-A1- 2004 056 083
- US-A1- 2005 000 813
- US-A1- 2005 045 729
- US-A1- 2005 092 830

## Beschreibung

Die Erfindung betrifft ein Sicherheitsdokument mit integriertem Schaltkreis und Anzeigesystem gemäß den Merkmalen des Anspruchs 1. Dokumente mit personen- und dokumentbezogenen Daten, wie z.B. Identifikationskarten, Reisepässe, Personalausweise, Führerscheine, Kreditkarten, Kundenausweise, Fahrausweise und dgl., werden oftmals mit integrierten Schaltkreiskomponenten (Integrated Circuit, IC) in Form eines kontaktbehafteten oder kontaktlosen Chipmoduls versehen. Bekannt ist hierfür auch die Verwendung eines sog. Dual-Interface Chips, der nicht nur über Kontakte arbeitet, sondern zusätzlich auch über eine kontaktlose Schnittstelle verfügt. Bei Verifikations-, Identifikations- und Authentifikationsprozessen ermöglichen diese Chipmodule eine hohe Effizienzsteigerung. Dabei spielen Geschwindigkeit und Zeiteffizienz ebenso wie die Sicherheit der Prüfprozesse eine entscheidende Rolle. Der Vorgang der Personen- und Dokumentenüberprüfung kann bspw. neben der visuellen Kontrolle auch elektronisch mit einem direkten Ohmschen Kontakt zum Chipmodul sowie kontaktlos über verschiedene drahtlose Kommunikationslösungen sowie mit einer Dual-Interface-Lösung erfolgen. Gemäß dem Stand der Technik werden dabei hochintegrierte Schaltkreise (engl. Integrated Circuits, IC) auf Siliziumbasis mit wenigen mm² Siliziumfläche verwendet. Diese Lösung bietet eine hohe Funktionsvielfalt auf kleinstem Raum. Die mikroskopische Feinheit muss durch diverse Technologien an die relativ groben Kommunikationsstrukturen eines Kontaktchipmoduls, Dual-Interface-Moduls oder Kontaktlos-Moduls, die beiden letzten mit Antennenstrukturen, angepasst werden. Neben den klassischen Modulen mit Drahtbondtechnik werden vermehrt Module mittels Flipchiptechnologien mit unterschiedlichen Kontaktierungsprozessen verwendet. Die diversen Qualitätsanforderungen sind bspw. in der ISO 10373 festgehalten.

Im Umfeld des Chipmoduls sind die genannten Dokumente grafisch gestaltet. Die grafische Information des personalisierten, d.h. mit personenbezogenen Daten versehenen Dokuments muss mit der elektronischen Information übereinstimmen. Deshalb werden bei der Herstellung bevorzugt beide Prozesse in einer Station ausgeführt, wobei zunächst weitgehend neutrale Dokumente verwendet werden und grafische Gestaltungsmethoden mit Lasergravur, Ink-Jet, digitalen Drucktechniken, Thermotransfer-, Thermosublimationsverfahren oder Prägevorgängen zum Einsatz kommen. Gegebenenfalls können auch grafisch vorpersonalisierte Dokumente anschließend elektronisch personalisiert werden, wobei sichergestellt sein muss, dass das richtige Dokument mit der richtigen zugehörigen Information versehen wird. Die herkömmliche Herstellung gestaltet sich hierdurch sehr aufwändig.

Die US 2004/0056083A zeigt eine Chipkarte mit einem integrierten Display.

Der Erfindung liegt die Aufgabe zugrunde, ein Sicherheitsdokument mit verbesserten Personalisierungsmöglichkeiten zu schaffen.

Die Aufgabe wird erfindungsgemäß durch ein Sicherheitsdokument mit einem integrierten Schaltkreis und mindestens einem in das Sicherheitsdokument integrierten Anzeigesystem gemäß Anspruch 1 gelöst, wobei der integrierte Schaltkreis individualisierbar, d.h. zur Aufnahme variabler, individualisierbarer, in der Regel personenbezogener Daten ausgebildet ist, die im Zuge einer Selbstpersonalisierung ausschließlich über den integrierten Schaltkreis in das Anzeigesystem zur visuellen Sichtbarmachung einschreibbar sind. Die Besonderheiten der vorliegenden Selbstpersonalisierung ergeben sich aus dem Anspruch 1.

Unter Selbstpersonalisierung wird dabei die Einspeicherung personenbezogener Daten (in ein in gewissem Umfang zunächst einheitliches und neutrales) Dokument verstanden, das zumindest ein IC-Element und zumindest ein Anzeigesystem aufweist, wobei im Zuge der elektrischen Personalisierung und Programmierung auch eine grafische Personalisierung vorgenommen wird, die ausschließlich/explizit dokumenten-intern abläuft. Sie kann im einfachsten Fall eine Nummer, einen Namen, einen Wohnort oder die Gültigkeitsdauer betreffen. Es können aber auch biometrische Daten, das Gesichtsbild des Dokumenteninhabers, seine Signatur oder seine Fingerabdrücke oder bestimmte Kombinationen solcher Daten selbstpersonalisierend intrinsisch erscheinen, bzw. dokumentenintern "von innen heraus" eingeschrieben werden. Die Programmierung des ICs wird damit zumindest teilweise in bestimmten Feldern des Dokuments sichtbar. Der Vorgang kann nur über den IC durchgeführt werden.

Bei dem Dokument nach der Erfindung ist das Einschreiben und/oder Verändern der Anzeige des Anzeigesystems durch sicherheitstechnische Maßnahmen, insbesondere kryptologische Methoden abgesichert. Um die Sicherheit gegen Fälschung der Anzeigen- und Speicherinhalte zu erhöhen, kann das Lese-/Schreibgerät beispielsweise die Sicherheitsstruktur des Chipmoduls mitverwenden. Die zugehörigen ICs sind mit kryptografischen Funktionen versehen und können auch nur in Kenntnis der jeweiligen Verschlüsselung programmiert werden. Das Anzeige- und/oder Speichersystem nach der vorliegenden Erfindung kann nur über das entsprechende Betriebssystem des ICs personalisiert werden, das entsprechend ausgebildet sein muss.

Der Vorteil des selbstpersonalisierenden Dokuments liegt darin, dass mit einer vorhandenen (RFID-)Peripherie zur Kommunikation mit ICs ohne zusätzliche Mittel wie ink-jet-Drucker oder Personalisierungslaser und den damit verbundenen technischen und sicherheitsbedingten Risiken ein hochwertig abgesichertes Produkt erzeugt werden kann.

Das Anzeigesystem nach der Erfindung enthält nach der Personalisierung personen- und/oder dokumentenspezifische Daten, insbesondere den Namen und/oder biometrische Daten des Dokumenteninhabers oder die Gültigkeitsdauer des Dokuments und umfasst zusätzlich ein oder mehrere Speicherelemente, die ebenfalls im Sicherheitsdokument integriert sind, und in die im Zuge der Selbstpersonalisierung über den integrierten Schaltkreis ebenfalls Daten einschreibbar sind.

Die Methode mit (auf dem Dokument verteilten) Speicherelementen kann insofern weitergebildet sein, als neben den leitungsmäßig mit dem IC verbundenen Speicherelementen mindestens ein weiteres Speicherelement vorgesehen ist, das zur Kommunikation mit dem integrierten Schaltkreis oder mit einem externen Lesegerät über eine induktive oder kapazitive Kopplung ausgebildet ist. Beispielsweise können einzelne, induktiv oder kapazitiv gekoppelte Schwingkreise vorhanden sein, die eine binäre Aussage enthalten. Wenn mehrere solcher Speicherelemente über das Dokument verteilt sind, wird dessen Fälschungssicherheit weiter erhöht.

Die Erfindung wird mittels eines passiven Anzeige- und/oder Speichersystems realisiert, das bistabil einstellbar ist. Bevorzugt werden hierfür elektrophoretische Lösungen, Flüssigkristalle wie cholesterische LC (Liquid Crystal)-Systeme oder ferromagnetische oder ferroelektrische Anzeigesysteme verwendet. In Weiterbildung der Erfindung können auch bistabil einstellbare Funktionsschichten auf organischer und/oder inorganischer Basis verwendet werden. Wesentlich hierbei ist, dass keine hohen Ströme in den diversen Datenleitungen fließen und ausschließlich auf Feldeffekten beruhende Transistoren eingesetzt werden. Dadurch dass weitgehend Kapazitäten geladen bzw. entladen werden müssen, sind keine extrem leitfähigen Verdrahtungsleitungen notwendig. Es können vielmehr feine, mittels Drucktechnik oder lasergestützter Strukturierungstechnologie hergestellte Leitungen verwendet werden, wobei auch Überkreuzungen in Cross-Over Technologie möglich sind, was die Verdrahtung wesentlich vereinfacht.

Wesentlich ist, dass das Anzeigesystem im stromlosen Zustand die Information behält.

Die bevorzugt serielle Ansteuerung der Anzeige- und/oder Speichereinheit kann über zwei bzw. drei Leitungen erfolgen. Die Spalten- und Zeilenleitungen sind mit entsprechenden drucktechnisch hergestellten Kapazitäten und gegebenenfalls weiteren elektronischen Elementen wie Dioden beschaltet. Hierbei hat sich die Verwendung feinst druckender Systeme, wie z.B. von Ink-jet-Drucksystemen als besonders geeignet herausgestellt, weil damit Strukturbreiten von bis zu 1,5 µm und submikroner Dicke realisiert werden können. Dies ist insbesondere bei der Herstellung von Feldeffekt-Transistoren von Bedeutung, weil damit der Abstand zwischen Source und Drain auf die genannten "bis zu 1,5 µm" reduziert werden kann und weiters die Gate-Elektrode durch die extrem dünnen Ausbildungen der n-oder p-halbleitenden Schichten und der anschließenden, extrem dünnen Isolationsschicht eine sehr effiziente und schnelle Schaltung zwischen Source und Drain ermöglicht. Die erforderliche Oberflächenbeschaffenheit im Sinne geringer Oberflächenrauhigkeit und weitgehender Stufenfreiheit wird durch spezielle Einebnungsschritte wie z.B. Prägen, Kalandrieren, Fräsen oder Pressen vor und zwischen den einzelnen Druckprozessen erreicht.

Die zwei oder drei Leiterbahnen der Anzeige- und/oder Speichereinheit, wie bspw. einer Signalleitung und zweier Spannungsversörgungsleitungen, können so innenliegend direkt mit einem Kontaktchipmodul oder einem Dual-Interface Chipmodul in Analogie zur Kontaktierung von Antennen verbunden werden.

Für die Ansteuerung der seriellen Kontakte stehen danach mehrere Möglichkeiten zur Auswahl:

In einer einfachen Ausführungsform kann das bistabile Anzeigefeld über ein kontaktbehaftetes Lese-/Schreibmodul beschrieben werden. Dazu müssen lediglich die innenliegenden seriellen Steuerleitungen über korrespondierende Chipmodulkontaktflächen nach außen geführt werden. Es bedarf dazu einer nur geringfügigen Adaptierung des Chipmoduls. Die gesamte Ansteuerelektronik kann dabei im Lese-/Schreibgerät ausgebildet sein.

In der Ausführungsform eines Dual-Interface Dokuments, also mit einem Chip, der außerdem auch über eine kontaktlose Schnittstelle verfügt, werden zusätzlich die beiden Antennenkontakte angeschlossen.

Bei der Ausführung als kontaktlos funktionierendes Dokument stehen keine externen ohmschen Verbindungen zur Verfügung; die gesamte Programmierung erfolgt über eine drahtlose Schnittstelle, bspw. nach bekannten RFID-Standards. Je nach Frequenz und aufzubringender Leistung kann es hierbei nötig sein, das Dokument in einer Art Faradayschem Käfig mit Energie zu beaufschlagen, um dem Selbstpersonalisierungsvorgang ausreichend Energie zur Verfügung stellen zu können. Üblicherweise unterliegen die Lese-/Schreib-RFID-Leistungen je nach Staat unterschiedlichen Leistungsgrenzwerten, die für den Menschen als unbedenklich gelten. Neben der Verwendung der genannten RFID-Kommunikationsmethoden können auch andere Frequenzbänder, gegebenenfalls in unterschiedlichen Kombinationen zum Einsatz kommen, was bei der Anordnung von auf dem Dokument verteilten Speicherelementen von Vorteil sein kann.

Eine weitere vorteilhafte Ausgestaltung besteht in einem Sicherheitsdokument der beschriebenen Art, bei dem eine loch artige Ausnehmung vorgesehen ist, wobei eine Spule um diese Aussparung herum im Dokument angeordnet ist. Die Energieeinspeisung funktioniert in diesem Falle, wie bspw. von manchen Haushaltsgeräten oder Zahnbürsten bekannt, induktiv über einen durch die Ausnehmung greifenden Induktionskern. Über diesen kann auch die Informationseinkopplung unter Anwendung geeigneter Modulationstechniken erfolgen.

Des weiteren kann neben induktiven und RFID-standardisierten Methoden eine kapazitive Kopplungsmethode mit Vorteil eingesetzt werden. Hierzu werden flächige Elektrodenelemente nebeneinander oder übereinander im Dokument sowie korrespondierende Gegenelektroden im Lese-/Schreibgerät angeordnet. Auch auf diese Weise ist eine effiziente Energie- und Signaleinkopplung möglich.

Ein wesentlicher Vorteil liegt darin, dass das Anzeigesystem einschließlich seiner seriellen Treiberlogik drucktechnisch herstellbar und über die Außenkontakte eines einen integrierten Schaltkreis enthaltenden Chipmoduls mit Informationsinhalt beschreibbar ist. Die Technologien zur Herstellung druckbarer Elektronik lassen sich für Sicherheitsdokumente besonders vorteilhaft nutzen. Moderne Technologien erlauben dabei nicht nur den Druck der Antenne in Form einer Spule oder eines Dipols und der den Druck elektrisch leitfähigen Verdrahtung, sondern auch die Herstellung von Kondensatoren, Widerständen, Dioden und Transistoren. Ebenso lassen sich auf diese Weise Anzeigefelder und Speicherelemente herstellen. Damit ergibt sich der Vorteil, dass eine hochintegrierte Schaltung mit einer speziellen Maske ohne Maskenänderung individuell an unterschiedliche Sicherheitsanforderungen des Dokumentenherstellers angepasst werden kann. Außerdem verbindet sich damit ein zusätzlicher Sicherheitsaspekt, weil für Fälschungen nicht nur der IC benötigt wird, sondern auch das Know-how der peripheren elektronischen Komponenten und deren Zusammenwirken mit dem IC bekannt sein muss.

Anzeige- und Speichersysteme sind nach Zeilen und Spalten organisiert, die in aktiver oder passiver Form elektrisch angesteuert werden. Hierzu dienen Treiber-Schaltkreise. Üblicherweise werden derartige Treiber-ICs möglichst in unmittelbarer Nachbarschaft der Zeilen- und Spaltenleitungen angeordnet um Rücksicht darauf zu nehmen, dass die vielen Zeilen- und Spaltenleitungen keine langen Wegstrecken überbrücken müssen. Bevorzugt erfolgt die Kommunikation zwischen dem Lese-/Schreibgerät und dem Sicherheitsdokument über einen Anzeigentreiber-IC, der zusätzlich im Chipmodul integriert ist. In anderer Ausführungsform ist die Treiberelektronik im IC des Chips selbst derart ausgebildet, dass kein zusätzlicher IC vorgesehen werden muss.

Das erfindungsgemäße Sicherheitsdokument wird in Laminationstechnik als Verbund aus einer Mehrzahl von Folien und/oder flexiblen Leiterplatten hergestellt. Unter flexiblen Leiterplatten werden die aus dem Stand der Technik bekannten, löttemperaturbeständigen Kunststofffolien wie bspw. Polyimid (PI), Polyethersulfon (PES) oder Polyetheretherketon (PEEK) sowie gewebte (z.B. FR-4) und nicht-gewebte Substrate (z.B. Aramid = Aromatische Polyamide) verstanden. Diese werden mit einer dünnen Kupferfolie versehen und in Subtrativtechnik mittels Ätzen strukturiert. Mit dieser Technik können auch zweiseitige oder mehrlagige flexible Leiterplatten mit entsprechenden Durchkontaktierungen hergestellt werden. Falls nur eine eingeschränkte Lötbeständigkeit erforderlich ist, können auch Polyesterfolien (PET) in Subtraktivtechnik, also mit geätzter Kupfer- oder Aluminiumfolie verwendet werden. Es können darüber hinaus alle genannten Substrate auch mit der sogenannten Additivtechnik, also bspw. mittels Silber-, Kupfer- oder Carbonpastendruck mit elektrischen Verdrahtungsstrukturen versehen werden. Diese Strukturen werden mittels isotroper oder anisotroper Leitkleber elektrisch kontaktiert. Die elektrische, intermetallisch leitende Verbindung kann auch mechanisch (Crimpen), mittels Ultraschall oder sonstigen Druck-Temperatur-Einwirkungen hergestellt werden.

Neben diesen weitgehend konventionellen Lösungen kann mittels sogenannter Polymerelektronik eine Integration von elektrischen Bauelementen in drucktechnischer Art realisiert werden. Wenngleich hierfür auch eine parallele Treiberlogik möglich ist, wird in Ausführungsformen der vorliegenden Erfindung eine serielle Ansteuerung der Anzeigefelder bzw. der Speicherelemente bevorzugt.

Von besonderem Vorteil ist, wenn das Anzeigesystem dabei zwei Verdrahtungsebenen in Form von Zeilen- und Spaltenleitungen umfasst und diese Ebenen innenliegend mit korrespondierenden Kontakten des Chipmoduls verbunden sind. Das Anzeigesystem kann dabei auch noch eine dritte Verdrahtungsebene umfassen, die als transparente Deckelektrode ausgebildet ist.

Der Vorgang der eingangs definierten Selbstpersonalisierung kann in Weiterbildung der Erfindung durch diverse Umgebungsparameter beeinflussbar sein. Beispielsweise kann das Dokument so ausgeführt sein, dass die Selbstpersonalisierung durch Beaufschlagung mit elektromagnetischer Strahlung ermöglicht oder gegebenenfalls verhindert werden. Außer mit Strahlungsenergie kann dieser Effekt auch durch Temperatureinfluss oder die Wirkung elektrischer oder magnetischer Felder erreicht werden. Beispielsweise können durch spezifische Laserstrahlimpulse einzelne Elemente eines Anzeigefeldes oder Speicherelements irreversibel fixiert oder zur Programmierung freigegeben werden.

Gemäß der Erfindung wird der elektronische Selbstpersonalisierungsvorgang in bestimmten Bereichen irreversibel gemacht. Dies kann durch Beaufschlagung mit einem Spannungs- und/oder Stromimpuls geschehen, durch den die entsprechenden elektrischen Verbindungen irreversibel geschlossen oder geöffnet werden, so dass eine weitere Veränderung oder Manipulation des Anzeige- bzw. Speicherinhalts unmöglich gemacht wird. Der gleiche Effekt kann auch durch Beaufschlagung mit einem entsprechenden Laserimpuls oder durch lokal wirksame elektrische oder magnetische Felder erzielt werden.

Weitere Merkmale und Vorteile ergeben sich aus der nachfolgenden Beschreibung von Ausführungsbeispielen.

### Es zeigen:

- Fig. 1:: Ein erstes Ausführungsbeispiel mit einem Chip-Modul mit integriertem Schaltkreis;
- Fig. 2:: Ein zweites Ausführungsbeispiel mit Kontaktloschip;
- Fig. 3:: Ein drittes Ausführungsbeispiel mit einer Spule als Antenne;
- Fig. 4:: Ein viertes Ausführungsbeispiel mit einem zweiten Anzeigefeld höherer Auflösung;
- Fig. 5:: Ein fünftes Ausführungsbeispiel in Form eines Reisepasses;
- Fig. 6:: Ein sechstes Ausführungsbeispiel in Form eines Reisepasses;
- Fig. 7:: Einen Querschnitt durch ein erfindungsgemäßes Sicherheitsdokument;
- Fig. 8: Einen Querschnitt durch ein kontaktlos funktionierendes Sicherheitsdokument;
- Fig. 9: Eine Anordnung zur kapazitiven Kopplung mit einem Lese-/Schreibgerät mit nebeneinander angeordneten Kopplungsflächen;
- Fig. 10: Eine Anordnung zur kapazitiven Kopplung mit einem Lese-/Schreibgerät mit übereinander angeordneten kopplungsflächen;
- Fig. 11:: Eine Ausführung mit induktiver Kopplung

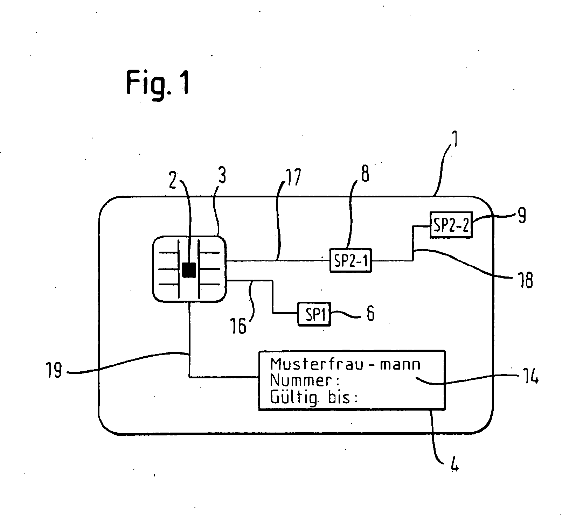

In Fig. 1 ist ein erstes Ausführungsbeispiel eines erfindungsgemäßen Sicherheitsdokuments 1 in der typischen Form einer ID-Karte bzw. in Gestalt einer kontaktbehafteten Chip-Karte mit implantiertem Chip-Modul 3 und darin enthaltenen IC 2 schematisch dargestellt. Das Dokument 1 enthält ein allgemeines Anzeigefeld 4 mit einer grafischen Darstellung 14 sowie mehrere mit SP bezeichnete Speicherelemente 6, 8, 9, diverse Verbindungen 16, 17, 18 zwischen den Speicherelementen 6, 8, 9 und dem Chip-Modul 3 sowie die Verdrahtung 19 zum Anzeigefeld 4.

Die vorgenannten Verbindungen 16, 17, 18 sind nur schematisch als einfache Linie dargestellt. Sie beinhalten je nach Art der Treiberlogik und der Energieversorgung mehrere Leitungen. Im Falle der seriellen Treiberlogik sind zumindest je drei Leitungen pro Speicherelement erforderlich.

Je nach Anwendung und geforderter Sicherheit lassen sich auch mehrere Anzeigefelder auf dem Dokument anordnen. Ebenso variabel ist die Zahl der Speicherelemente 6, 8, 9, wobei auch wesentlich komplexere Speicheranordnungen ausgebildet sein können.

Das Anzeigefeld ist elektrophoretisch, ferromagnetisch oder als cholesterisches Flüssigkristallsystem ausgebildet und besitzt die Eigenschaft, bistabil einstellbar zu sein, so dass es im stromlosen Zustand die eingeschriebene Information behält.

Die Herstellung eines derartigen Dokuments erfolgt bevorzugt mittels Laminations- und/oder Klebetechniken oder mittels Einlegespritzguss. In allen Fällen wird auf einem folienartigen Substrat die Verdrahtung additiv oder subtraktiv hergestellt. Darauf werden die Speicherelemente und das Anzeigenfeld aufgebracht. Dieses Substrat mit der Verdrahtung und diversen Komponenten wird dann mit weiteren Folien in einer Laminierpresse gegebenenfalls im Mehrfachnutzen zu einem Dokumentenverbund vereinigt. In diesem Verbund wird durch Fräsen eine Kavität für das Chip-Modul hergestellt. Nach Freilegen der elektrischen Anschlüsse wird das Chip-Modul implantiert. Im Falle des Einlegespritzgusses wird bereits im Werkzeug die Kavität für das Chip-Modul und die elektrischen Kontaktierungsstellen freigehalten. Anzeigefeld und Verbindungsleitungen sind drucktechnisch hergestellt.

Im Zuge der Individualisierung des IC's 2 werden von einer Lese- und Einschreibvorrichtung personen- und dokumentbezogene Daten vom IC übernommen und vom IC direkt in das Anzeigefeld 4 und in die Speicherelemente 6, 8, 9 eingeschrieben. Der Einschreibvorgang kann auch direkt vom Lesegerät aus unter Einbeziehung der im IC niedergelegten kryptografischen Funktionen erfolgen. Das Anzeigesystem kann somit nur über das entsprechende Betriebssystem des IC's individualisiert und personalisiert werden.

Eine Änderung der graphischen Daten im Anzeigefeld unterliegt sicherheitstechnischen Vorgaben, wie sie auch für den IC gelten. Die Personalisierung ist dabei so organisiert, dass sie bezüglich bestimmter Daten reversibel ist. Eine solche reversible Personalisierung bietet sich bspw. für Adressfelder in Personaldokumenten an. Andere Daten, wie Name und Geburtsdatum sind irreversibel festgeschrieben. Auch eine beschränkt beschreibbare Selbstpersonalisierung ist möglich. Hierunter wird ein irreversibles Beschreiben verstanden, dem nachträglich lediglich noch eine zusätzliche Information hinzugefügt werden kann. Bspw. kann bei Eintreten vorgegebener Kriterien das Dokument ungültig gemacht werden, indem das Anzeigesystem komplett dunkel gemacht wird.

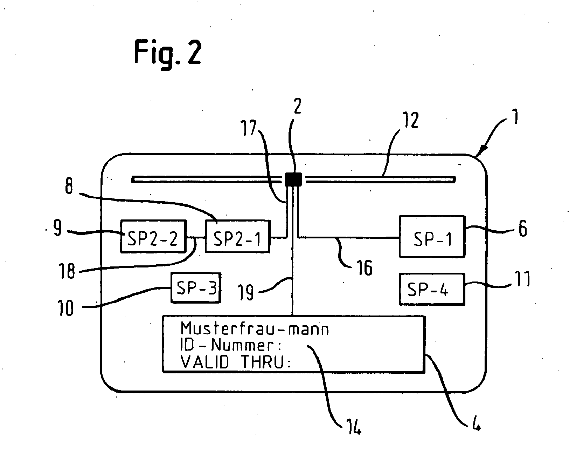

Fig. 2 ist die Draufsicht auf ein Sicherheitsdokument 1 in einer zweiten Ausführungsform, nämlich in Gestalt einer kontaktlosen bzw. berührungslosen Chipkarte mit einem Dipol 12 als Antenne schematisch dargestellt. Ähnlich wie in Fig. 1 ist ein Anzeigefeld 4 mit einer grafischen Darstellung 14 durch ein Verdrahtungselement 19 mit dem IC 2 verbunden. Die mit SP-1 und SP2-1 bezeichneten Speicherelemente 6, 8 sind über die Verdrahtungselemente 16 bzw. 17 mit dem IC 2 verbunden. Das mit SP2-2 bezeichnete Speicherelement 9 ist seriell mit dem Speicherelement 8 verbunden. Die Speicherelemente 10 und 11 (SP-3, SP-4) sind ohne ohmsche Kontaktierung und können mit dem IC und/oder mit einem nicht gezeichneten externen Lesegerät über induktive oder kapazitive Kopplung kommunizieren.

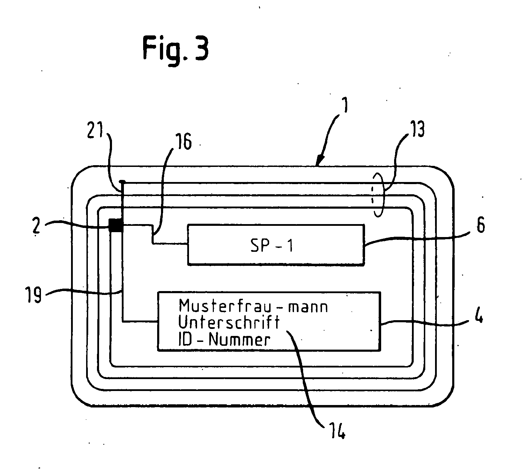

Fig. 3 zeigt eine Ausführungsform einer ID-Karte mit einer Spule 13 als Antenne, über die der IC 2 des Interposers 21 beschreibbar und auslesbar ist. Das Dokument weist ein Anzeigenfeld 4 mit grafischen Daten 14 des Dokumenteninhabers auf, das über das Leitungssystem 19 mit dem IC 2 verbunden ist. Ein Speicherelement (SP-1) 6 steht über die Verdrahtung 16 ebenfalls mit dem IC in Verbindung. Die Spule 13 ist dabei im Randbereich der ID-Karte in mehreren Windung umlaufend angeordnet und umschließt das Anzeigenfeld 4 und ein Speicherelement (SP-1) 6.

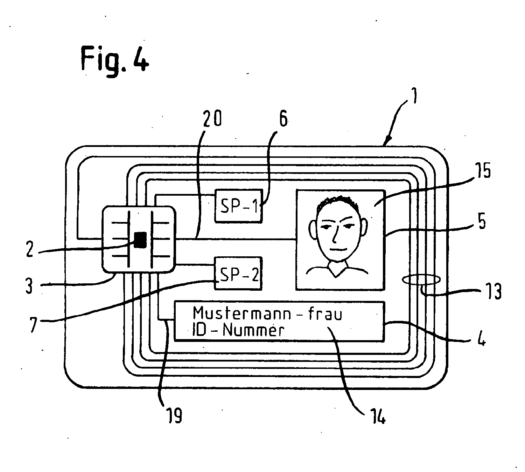

In Fig. 4 ist eine RFID-fähige ID-Karte nach einem vierten Ausführungsbeispiel der Erfindung dargestellt. Das Sicherheitsdokument 1 umfasst einen Chip-Modul 3 mit integriertem Schaltkreis 2 sowie eine Antenne 13, die im gezeigten Beispiel als Spule ausgebildet ist. Anstelle der Spule kann je nach geforderter Spezifikation auch ein Dipol verwendet werden, wobei als RFID-Frequenz anstelle der bei Spulenantennen üblichen 13,56 MHz dann eine Frequenz im UHF-Bereich bei 860 MHz bis 940 MHz verwendet wird. Des weiteren sind ein erstes Anzeigefeld 4 mit relativ geringer Auflösung sowie ein zweites Anzeigefeld 5 für eine entsprechend höher aufgelöste Darstellung 15 vorgesehen. Das erste Anzeigenfeld 4 enthält alphanumerische Information 14 und ist über die Verdrahtung 19 mit dem IC verbunden. Auf dem zweiten, über die Leitung 20 mit dem integrierten Schaltkreis verbundene Anzeigefeld 5 werden Bilder wiedergegeben, die eine höhere Auflösung erfordern, wie z.B. das Portrait des Dokumenteninhabers oder andere biometrische Daten. Zusätzlich sind auch hier Speicherelemente 6, 7 vorgesehen, in die ebenfalls im Zuge der Selbstpersonalisierung personen- und dokumentbezogene Information eingeschrieben wird.

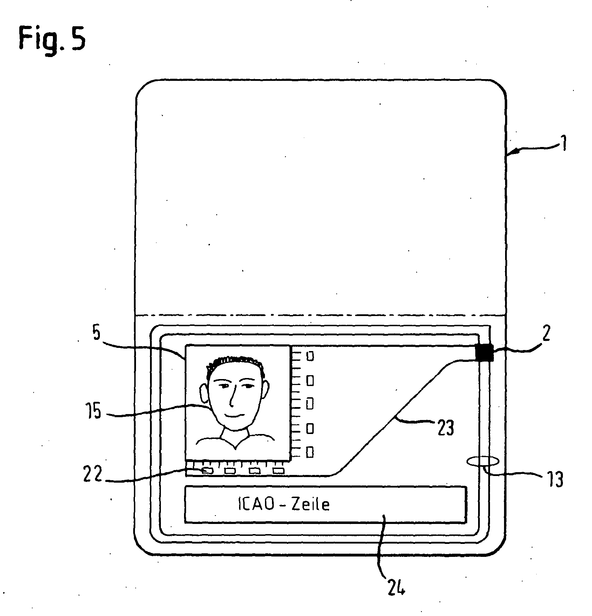

Fig. 5 zeigt ein Sicherheitsdokument 1 in Gestalt eines Reisepasses nach der Erfindung. Die Zeichnung gibt dabei die Personalisierseite mit der hochaufgelösten bildlichen Darstellung 15 auf dem Anzeigefeld 5 wieder, wobei eine kontaktlose RFID-Schaltung auf der Basis einer Antennenspule 13 vorgesehen ist. Die flexible Verdrahtung des Anzeigenfeldes 5 mit dem IC 2 ist mit 23 bezeichnet. Die Anordnung von Anzeigefeld-Treiber ICs 22 ist schematisch auf der Verdrahtung 23 dargestellt. Ein weiteres Anzeigefeld enthält die sog. ICAO-Zeile 24 (International Civil Aviation Organisation; ICAO MRTD-Norm ISO 9303).

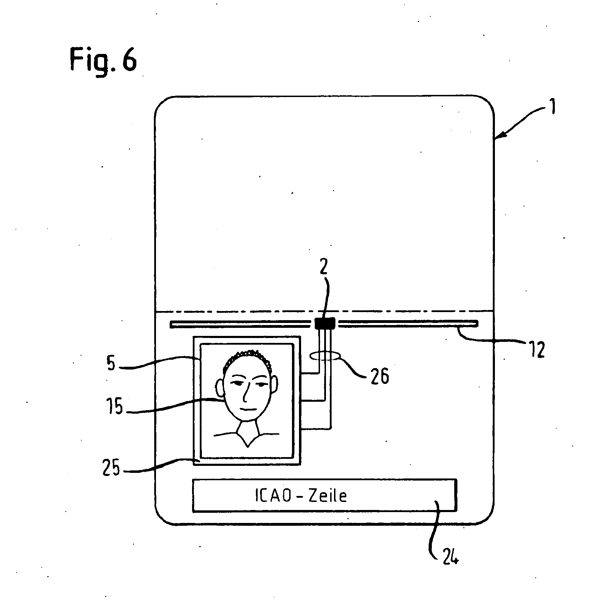

In Fig. 6 ist ein weiteres Beispiel eines Reisepasses mit einer Dipolantenne 12 und einem kontaktlos bzw. berührungslos arbeitenden IC 2 dargestellt. Das Anzeigefeld 5 mit der bildlichen Darstellung 15 weist eine umlaufende Struktur 25 auf, welche die drucktechnisch hergestellte Treiberlogik für eine serielle Ansteuerung über drei Verbindungen 26 zum IC 2 enthält. Neben dem Anzeigefeld 5 für die bildliche Darstellung ist wiederum ein weiteres Anzeigefeld für die ICAO-Zeile vorgesehen.

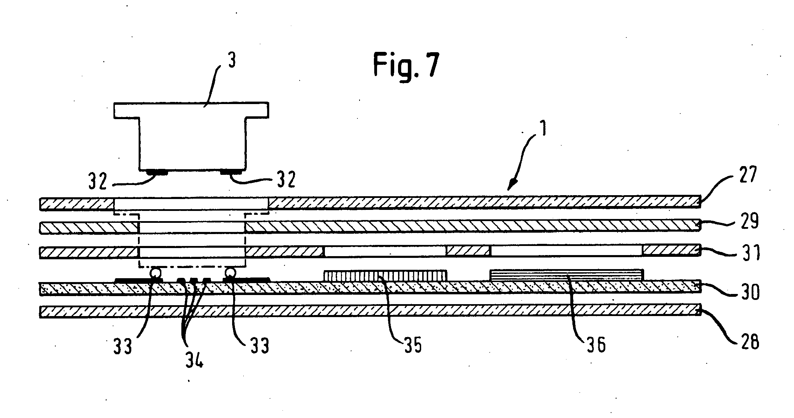

Fig. 7 zeigt den Querschnitt durch ein Sicherheitsdokument nach der Erfindung. Das Dokument 1 besitzt einen Laminataufbau aus den Folien 27, 28, 29, 30, 31. Das Dokument kann unter Verwendung einzelner Folienlaminate hergestellt werden. Vorzugsweise wird jedoch ein Einlegespritzgussverfahren verwendet. Dabei wird ein Substrat 30 mit den diversen Komponenten, bspw. den Antennenwindungen 34 und den Antennenkontaktflächen 33 in ein Spritzgusswerkzeug gelegt und hinterspritzt. Diese Verdrahtungssubstrat 30 wird mit den anderen Lagen 27, 28, 29 als Paket in einer Laminierpresse, bspw. einer Heiz-Kühl-Mehretagen-Transferpresse zum Dokument 1 zusammengefügt. Zu den diversen Komponenten zählen neben Antennenwindungen und Antennenkontaktflächen u.a. auch Speicher 35 und Anzeigeelemente 36. Zu den dem Laminationsprozess unterworfenen Lagen zählen u.a. die Overlayfolien 27, 28, welche die Vorder- und Rückseite des Dokuments bilden, sowie teilweise bedruckte Innenlagen 29, 30. Einzelne Innenlagen sind als spacer ausgebildet und weisen an den mit bestimmten Komponenten korrespondierenden Stellen Ausnehmungen auf.

Nach Fertigstellung des Laminats wird eine Kavität für das Chipmodul 3 gefräst. Mit einem Stirnfräser werden die Anschlusskontakte 33 der Antenne 34 freigelegt. Das Chipmodul wird mit einem Verbundklebersystem mit dem Laminat verbunden, wobei die elektrische Kontaktierung mittels eines mit einem Dispensergerät applizierten leitfähigen Polymers erfolgt.

Bei dem gezeigten Ausführungsbeispiel erfolgt die grafische Gestaltung auf den Folien 29 und 30. Sie kann jedoch auch alternativ oder zusätzlich auf den üblicherweise transparent ausgeführten Overlayfolien 27, 28 innenliegend spiegelbildlich erfolgen. Grundsätzlich können auch die Oberflächen des Dokuments mit diversen Drucktechniken gestaltet und personalisiert werden. Die Drucktechniken umfassen dabei den Stand der Technik und beinhalten die einschlägig bekannten Tief-, Hoch-, Flach- und Durchdruckverfahren wie bspw. Stichtiefdruck, Letterset, Offset und Siebdruck. Zur Darstellung individualisierter/personengebundener Daten werden digitale Druckverfahren wie bspw. Ink-Jet- oder Transfer-Druckverfahren bevorzugt. Zum Schutz einer solchen grafisch gestalteten Oberfläche wird in der Regel noch eine transparente abriebfeste Schicht appliziert. Gegebenenfalls wird auf oder unterhalb der Overlayfolie noch ein diffraktives flächiges Sicherheitselement aufgebracht.

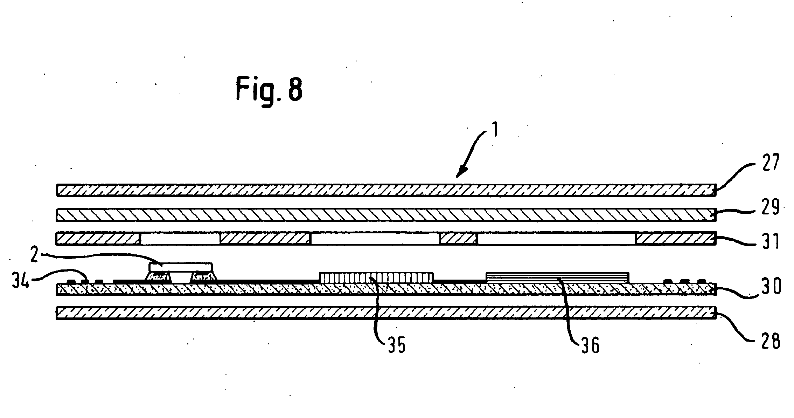

Fig. 8 zeigt den Querschnitt durch ein kontaktlos funktionierendes Sicherheitsdokument 1. Der Laminataufbau entspricht im wesentlichen demjenigen von Fig. 7. Auf dem Substrat 30 sind ein IC 2 in unverkapselter Ausführung mit Flip-Chip Kontaktierung sowie Antennenwindungen 34, ein Speicherelement 35 und das Anzeigenfeld 36 aufgebracht. Die innenliegenden Folien 29, 30, 31 werden auf der Ober- und Unterseite von Overlayfolien 27 und 28 in der zuvor beschriebenen Weise abgedeckt.

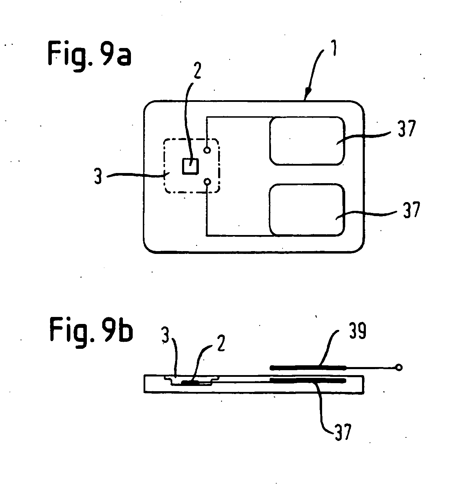

In Fig. 9 ist eine Ausführung des Sicherheitsdokuments 1 für eine kapazitive Kopplung mit einem Lese-/Schreibgerät skizziert. Dicht unter der Oberfläche des Dokuments sind lateral nebeneinander zwei Kopplungsflächen 37 ausgebildet. Sie dienen zur Energieeinspeisung für die Versorgung des IC's 2 im Chipmodul 3. Der Frequenzbereich liegt hier bei wenigen KHz. Zusätzlich können auch die Informationseinbringung und das Auslesen kapazitiv über die Kopplungsflächen 37 erfolgen. Die Fig. 9a zeigt dabei das Sicherheitsdokument 1 in Draufsicht. In Fig. 9b ist das gleiche Dokument von der Seite zu sehen, wobei auch noch die Gegenelektrode 39 im Lese-/Schreibgerät dargestellt ist, die zur effizienten Energieeinspeisung in möglichst geringem Abstand zur korrespondierenden Kopplungsfläche 37 angeordnet ist.

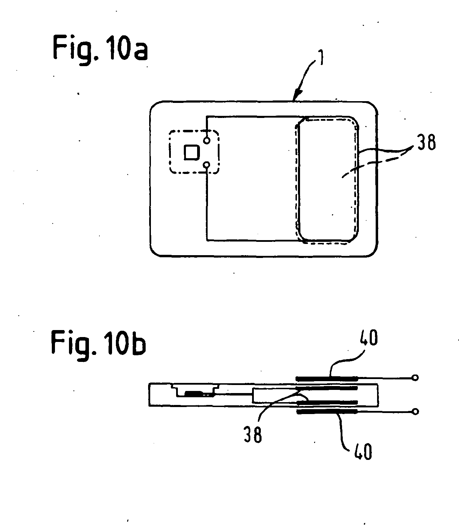

Fig. 10 zeigt eine Anordnung zur kapazitiven Kopplung des Sicherheitsdokuments 1 mit einem Lese-/Schreibgerät mit übereinander angeordneten Kopplungsflächen 38, wobei Fig. 10a wiederum das Dokument in Draufsicht und Fig. 10b im Querschnitt zeigt. Die Kopplungsflächen 38 befinden sich dicht unter der Oberfläche von Vorder- und Rückseite des Dokuments, so dass sie zueinander einen wesentlich größeren Abstand aufweisen als zu den Gegenelektroden 40 im Lese-/Schreibgerät.

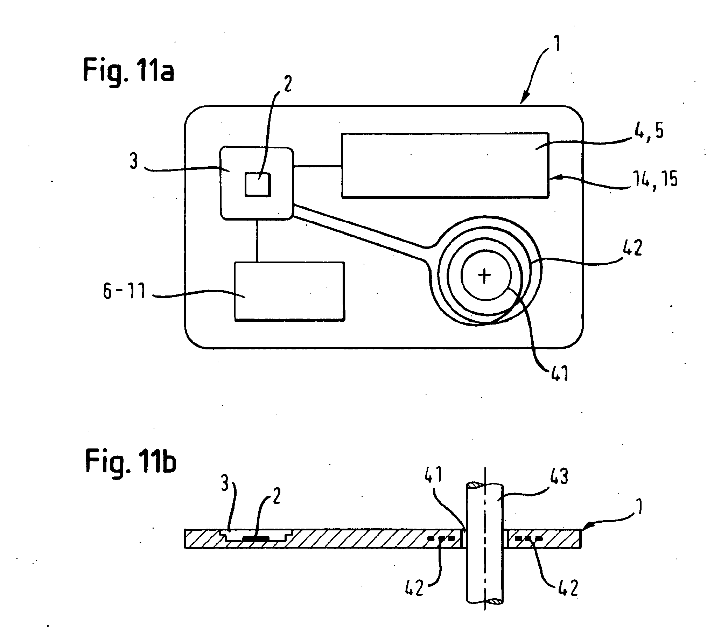

In Figur 11 ist ein Beispiel für eine induktive Kopplung des Sicherheitsdokuments 1 mit einem Lese-/Schreibgerät dargestellt. Eine Spule 42 ist um eine lochartige Aussparung 41 im Dokument 1 angeordnet. In der Draufsicht der Fig. 11a sind wiederum das Chipmodul 3 mit dem IC 2 sowie die mit ihm verbundenen Speicherelemente 6 - 11 und Anzeigefelder 4, 5 mit den grafischen Darstellungen 14, 15 skizziert. Wie im Querschnittsbild der Fig. 11b dargestellt kann die Energieeinbringung und/oder der Informationsaustausch über einen in der Aussparung 41 angeordneten Induktionskem 43 erfolgen.

Nach der Erfindung personalisieren sich somit Ausweise, ID-Karten und dgl., die einen Datenträger in Form eines IC integriert enthalten, auf dem personenbezogene Daten wie Name, Geburtsdatum, Wohnort, biometrische Daten, insbesondere ein Gesichtsbild und Fingerabdrücke sowie eine Unterschriftsprobe usw. abgespeichert sind, nach einer sicherheits- und signaturkonformen Freigabe selbst. Diese Selbstpersonalisierung kann auch einen Gesichtsdatensatz als irreversibles Foto umfassen. Dabei werden Anzeigenbereiche der Karte derart verändert, dass dort die personengebundenen Daten sichtbar gemacht werden. Die zu beschreibenden Bereiche sind stromlos irreversibel ausgestattet. In Einzelfällen, bspw. beim Wohnort können die Daten auch zwei bis drei mal überschreibbar sein. Hierzu werden für die Anzeige- und Schaltungselemente neuartige Drucktechnologien mit elektronischen Tinten, druckbaren Liquid Cristal oder OLED-Systemen verwendet. Das Einschreiben erfolgt ausschließlich über den IC. Von bestimmten Ausnahmen abgesehen, bei denen eine vorgegebene Anzahl reversibler Personalisierungen zugelassen wird, ist das Einschreiben von Daten nicht wiederholbar. Bei Manipulationsversuchen werden die Anzeigefelder zerstört.

### Bezugszeichen:

- 1: Sicherheitsdokument
- 2: integrierter Schaltkreis, IC (Chip)
- 3: Chipmodul
- 4: Anzeigefeld 1
- 5: Anzeigefeld 2
- 6 - 11: Speicherelemente
- 12: Dipolantenne
- 13: Antennenspule
- 14: grafische Darstellung niedriger Auflösung (alphanumerische Information)
- 15: grafische Darstellung höherer Auflösung
- 16 - 18: Verdrahtung Speicherelemente
- 19: Verdrahtung Anzeigefeld 1
- 20: Verdrahtung Anzeigefeld 2
- 21: Brücke, Interposer
- 22: Treiber-IC
- 23: flexible Verdrahtung
- 24: ICAO-Zeile
- 25: serielle Anzeigelektronik
- 26: Verdrahtung, IC - serielle Anzeigeelektronik
- 27: Overlayfolie, Vorderseite
- 28: Overlayfolie, Rückseite
- 29: vorderseitige Innenlage
- 30: rückseitige Innenlage
- 31: Verdrahtungssubstrat, Innenlage
- 32: Kontaktflächen des Dual-Interface Chipmoduls
- 33: Antennkontaktflächen
- 34: Antennwindungen
- 35: Speicherelement
- 36: Anzeigeelement
- 37, 38: kapazitive Kopplungsflächen
- 39, 40: Gegenelektroden im Lese-/Schreibgerät
- 41: lochartige Aussparung
- 42: Spule
- 43: Induktionskern

## Patentansprüche

1. Sicherheitsdokument (1) mit einem integrierten Schaltkreis (2) zur Kommunikation mit einem externen Lese- und/oder Schreibgerät und mindestens einem in das Sicherheitsdokument (1) integrierten Anzeigesystem, wobei der integrierte Schaltkreis (2) zur Einspeicherung personenbezogener Daten ausgebildet ist, die zugleich mit der Einspeicherung im Zuge einer Selbstpersonalisierung nur über den integrierten Schaltkreis (2) in ein bistabiles Anzeigefeld (4, 5) des Anzeigesystems zur visuellen Sichtbarmachung einschreibbar sind, und wobei das durch die Selbstpersonalisierung anhand der personenbezogenen Daten gespeicherte Muster des Anzeigesystems (4, 5) in vorbestimmten ersten Bereichen durch Schließen oder Öffnen der entsprechenden elektrischen Verbindungen irreversibel und in vorbestimmten zweiten Bereichen in begrenzter Anzahl von Wiederholungen reversibel ausgebildet ist.

2. Sicherheitsdokument nach Anspruch 1 wobei das Anzeigesystem ein oder mehrere Speicherelemente (6, 7, 8, 9, 10, 11) aufweist, die ebenfalls im Sicherheitsdokument (1) integriert sind und in die im Zuge der Selbstpersonalisierung über den integrierten Schaltkreis (2) ebenfalls Daten einschreibbar sind.

3. Sicherheitsdokument nach einem der Ansprüche 1 bis 2, wobei das Anzeigefeld (4, 5) mittels zweier oder dreier innenliegender Leiterbahnen (19, 20) mit dem integrierten Schaltkreis (2) verbunden ist, über die der Anzeigeinhalt (14, 15) seriell übertragbar ist, wobei das Anzeigefeld (4, 5) im stromlosen Zustand die Information behält.

4. Sicherheitsdokument nach einem der Ansprüche 1 bis 3, wobei mindestens ein Speicherelement (11) im Sicherheitsdokument (1) integriert ist, das zu einer Kommunikation über eine induktive oder kapazitive Kopplung mit dem integrierten Schaltkreis (2) oder mit dem externen Lese-/Schreibgerät ausgebildet ist.

5. Sicherheitsdokument nach einem der Ansprüche 1 bis 4, wobei das Anzeigesystem einschließlich seiner seriellen Treiberlogik (22) drucktechnisch hergestellt ist.

6. Sicherheitsdokument nach einem der Ansprüche 1 bis 5, wobei das Anzeigesystem über die Außenkontakte (32) eines den integrierten Schaltkreis (2) enthaltenden Chipmoduls (3) mit Informationsinhalt beschreibbar ist.

7. Sicherheitsdokument nach einem der Ansprüche 1 bis 6, wobei das Anzeigesystem über einen Anzeigentreiber (22) mit Informationsinhalt beschreibbar ist, der im IC (2) insbesondere des Chipmoduls (3) ausgebildet ist.

8. Sicherheitsdokument nach einem der Ansprüche 1 bis 6, wobei das Anzeigesystem über einen Anzeigentreiber-IC (22) mit Informationsinhalt beschreibbar ist, der insbesondere im Chipmodul (3) zusätzlich zu dem dort vorgesehenen IC (2) integriert ist.

9. Sicherheitsdokument nach einem der Ansprüche 1 bis 8, wobei Zeilen- und Spaltenleitungen des Anzeigesystems mit Kondensatoren für eine serielle Datenverarbeitung ausgebildet sind.

10. Sicherheitsdokument nach einem der Ansprüche 1 bis 9, wobei das Anzeigesystem zwei Verdrahtungsebenen in Form von Zeilen- und Spaltenleitungen umfasst und diese Ebenen innenliegend mit korrespondierenden Kontakten (33) des Chipmoduls (3) verbunden sind.

11. Sicherheitsdokument nach Anspruch 10, wobei das Anzeigesystem eine dritte Verdrahtungsebene aufweist, die als transparente Deckelektrode ausgebildet ist.

12. Sicherheitsdokument nach einem der Ansprüche 1 bis 11, wobei ein, oder der, den integrierten Schaltkreis (2) enthaltender Chipmodul (3) in einer ausgefrästen Kavität des Sicherheitsdokuments (1) angeordnet ist.

13. Sicherheitsdokument nach einem der Ansprüche 1 bis 12, wobei das Sicherheitsdokument (1) eine lochartige Aussparung (41) aufweist, um die herum im Dokument (1) eine Spule (42) zur induktiven Einkopplung von Energie und Signalen angeordnet ist.

14. Sicherheitsdokument nach einem der Ansprüche 1 bis 12, wobei das Sicherheitsdokument (1) flächige Elektroden (37, 38) zur kapazitiven Einkopplung von Energie und Signalen enthält.

15. Sicherheitsdokument nach einem der Ansprüche 1 bis 14, wobei das Dokument (1) als Laminatverbund einer Mehrzahl von Folien und/oder flexiblen Leiterplatten (27, 28, 29, 30, 31) ausgebildet ist.

16. Sicherheitsdokument nach einem der Ansprüche 1 bis 15, wobei wenigstens zwei Anzeigefelder (19, 20) unterschiedlicher Auflösung auf dem Dokument (1) vorgesehen sind.

## Claims

1. A security document comprising an integrated circuit (2) for communicating with an external reading and/or writing device and at least one display system which is integrated in the security document (1), the integrated circuit (2) being designed to store personal data which can be written to a bistable display panel (4, 5) of the display system using only the integrated circuit (2) during self-personalization in order to be visualized, and wherein the pattern created by the self-personalization in the display panel (4, 5) using the personal data is formed irreversibly in predetermined first areas by closing or opening of respective electrical connections and is formed reversibly with a limited number of repetitions in predetermined second areas.

2. The security document as claimed in claim 1, the display system having one or more memory elements (6, 7, 8, 9, 10, 11) which are likewise integrated in the security document (1) and to which data can likewise be written using the integrated circuit (2) during self-personalization.

3. The security document as claimed in one of claims 1 or 2, the display panel (4, 5) being connected to the integrated circuit (2) using two or three internal conductor tracks (19, 20) which can be used to serially transmit the display contents (14, 15), the display panel (4, 5) retaining the information in the zero-current state.

4. The security document as claimed in one of claims 1 to 3, at least one memory element (11) being integrated in the security document (1), said memory element being designed to communicate with the integrated circuit (2) or with an external reading/writing device by means of inductive or capacitive coupling.

5. The security document as claimed in one of claims 1 to 4, the display system including its serial driver logic (22) being produced by printing technology.

6. The security document as claimed in one of claims 1 to 5, information contents being able to be written to the display system using the external contacts (32) of a chip module (3) which contains an integrated circuit (2).

7. The security document as claimed in one of claims 1 to 6, information contents being able to be written to the display system using a display driver (22) which is formed in the IC (2) of the chip module (3).

8. The security document as claimed in one of claims 1 to 6, information contents being able to be written to the display system using a display driver IC (22) which is integrated in the chip module (3) in addition to the IC (2) provided there.

9. The security document as claimed in one of claims 1 to 8, row and column lines of the display system being formed with capacitors for serial data processing.

10. The security document as claimed in one of claims 1 to 9, the display system comprising two wiring planes in the form of row and column lines and these planes being internally connected to corresponding contacts (33) of the chip module (3).

11. The security document as claimed in claim 10, the display system having a third wiring plane which is in the form of a transparent covering electrode.

12. The security document as claimed in one of claims 1 to 11, a chip module (3) which contains an integrated circuit (2) being arranged in a milled cavity of the security document (1).

13. The security document as claimed in one of claims 1 to 12, the security document (1) having a hole-like recess (41), a coil (42) for inductively injecting energy and signals being arranged around said recess in the document (1).

14. The security document as claimed in one of claims 1 to 12, the security document (1) containing two-dimensional electrodes (37, 38) for capacitively injecting energy and signals.

15. The security document as claimed in one of claims 1 to 14, the document
(1) being in the form of a laminate composite comprising a plurality of films and/or flexible printed circuit boards (27, 28, 29, 30, 31).

16. The security document as claimed in one of claims 1 to 15, at least two display panels (19, 20) of different resolution being provided on the document (1).

## Revendications

1. Document de sécurité (1) comprenant un circuit intégré (2) pour communiquer avec un appareil de lecture et/ou d'écriture externe et comprenant au moins un système indicateur intégré dans le document de sécurité (1), le circuit intégré (2) étant configuré pour mémoriser des données personnelles, lesquelles peuvent être inscrites simultanément avec la mémorisation dans le cadre d'une personnalisation propre uniquement par le biais du circuit intégré (2) dans un champ d'indication bistable (4, 5) du système indicateur en vue de leur affichage visuel, et le modèle de système indicateur (4, 5) mémorisé par la personnalisation propre au moyen des données personnelles étant réalisé irréversible dans des premières zones prédéfinies par fermeture ou ouverture des liaisons électriques correspondantes et réversible avec un nombre limité de répétitions dans des deuxièmes zones prédéfinies.

2. Document de sécurité selon la revendication 1, le système indicateur présentant un ou plusieurs éléments de mémorisation (6, 7, 8, 9, 10, 11) qui sont eux aussi intégrés dans le document de sécurité (1) et dans lesquels des données peuvent également être inscrites dans le cadre de la personnalisation propre par le biais du circuit intégré (2).

3. Document de sécurité selon l'une des revendications 1 à 2, le champ d'indication (4, 5) étant relié avec le circuit intégré (2) au moyen de deux ou trois pistes conductrices (19, 20) intérieures par le biais desquelles le contenu de l'indication (14, 15) peut être transmis en série, le champ d'indication (4, 5) contenant l'information lorsqu'il n'est pas sous tension.

4. Document de sécurité selon l'une des revendications 1 à 3, au moins un élément de mémorisation (11) étant intégré dans le document de sécurité (1), lequel est configuré pour une communication par le biais d'un couplage inductif ou capacitif avec le circuit intégré (2) ou avec l'appareil de lecture/d'écriture externe.

5. Document de sécurité selon l'une des revendications 1 à 4, le système indicateur, y compris sa logique de commande série (22), étant produit par technique d'impression.

6. Document de sécurité selon l'une des revendications 1 à 5, un contenu d'information pouvant être inscrit dans le système indicateur par le biais des contacts extérieurs (32) d'un module à puce (3) contenu dans le circuit intégré (2).

7. Document de sécurité selon l'une des revendications 1 à 6, un contenu d'information pouvant être inscrit dans le système indicateur par le biais d'un circuit de commande d'affichage (22) qui est réalisé dans le Cl (2), notamment du module à puce (3).

8. Document de sécurité selon l'une des revendications 1 à 6, un contenu d'information pouvant être inscrit dans le système indicateur par le biais d'un CI de commande d'affichage (22) qui est notamment intégré dans le module à puce (3) en plus du Cl (2) qui y est prévu.

9. Document de sécurité selon l'une des revendications 1 à 8, les conducteurs de lignes et de colonnes du système indicateur étant réalisés avec des condensateurs pour un traitement en série des données.

10. Document de sécurité selon l'une des revendications 1 à 9, le système indicateur comprenant deux plans de câblage sous la forme de conducteurs de lignes et de colonnes et ces plans étant reliés intérieurement avec les contacts (33) correspondants du module à puce (3).

11. Document de sécurité selon la revendication 10, le système indicateur comprenant un troisième plan de câblage qui est réalisé sous la forme d'une électrode de recouvrement transparente.

12. Document de sécurité selon l'une des revendications 1 à 11, un ou le module à puce (3) qui contient le circuit intégré (2) étant disposé dans une cavité creusée par fraisage du document de sécurité (1).

13. Document de sécurité selon l'une des revendications 1 à 12, le document de sécurité (1) présentant un évidement (41) de type orifice autour duquel est disposée dans le document (1) une bobine (42) pour l'injection par couplage inductif d'énergie et de signaux.

14. Document de sécurité selon l'une des revendications 1 à 12, le document de sécurité (1) contenant des électrodes planes (37, 38) pour l'injection par couplage capacitif d'énergie et de signaux.

15. Document de sécurité selon l'une des revendications 1 à 14, le document (1) étant réalisé sous la forme d'un composé stratifié d'une pluralité de films et/ou de circuits imprimés souples (27, 28, 29, 30, 31).

16. Document de sécurité selon l'une des revendications 1 à 15, au moins deux champs d'indication (19, 20) de résolutions différentes étant prévus sur le document (1).
